# EUROPÄISCHE PATENTSCHRIFT

(11) **EP 2 357 103 B1**
(45) Veröffentlichungstag und Bekanntmachung des Hinweises auf die Patenterteilung: **13.05.2015**
(21) Anmeldenummer: 11400011.0
(22) Anmeldetag: 03.02.2011
(51) Int. Cl.: B60J 7/19, B60J 7/12

(54) **Verschluss für einen Verdeckkastendeckel eines Cabriolet-Fahrzeugs**
Locking for a tonneau cover for convertible vehicle
Verrouillage pour un couvercle pour un véhicule de type cabriolet

(30) Priorität: 16.02.2010 DE 102010008119
(43) Veröffentlichungstag der Anmeldung: 17.08.2011
(73) Patentinhaber: Magna Car Top Systems GmbH, 74321 Bietigheim-Bissingen (DE)
(72) Erfinder: Blech, Christof, 71272 Renningen (DE)
(74) Vertreter: Völger, Silke Beatrix

(56) Entgegenhaltungen:
- DE-A1-102005 025 789
- DE-A1-102005 052 063
- US-A- 5 267 769

## Beschreibung

Die vorliegende Erfindung betrifft einen Verschluss für eine Abdeckung eines Fahrzeugs, insbesondere eines Cabriolet-Fahrzeugs mit einem bewegbaren Dach, mit den Merkmalen des Oberbegriffs des Anspruchs 1.

Bei bewegbaren Dächern von Cabrio-Fahrzeugen kann das Dach von einer geschlossenen Stellung in eine offene Stellung bewegt werden, wobei bei geöffnetem Dach das zusammengelegte Dach in einem Aufnahmeraum im Heck des Fahrzeugs abgelegt wird. Dieser Aufnahmeraum ist in der Regel mit einer Abdeckung verschlossen, die bei öffnendem und/oder schließendem Dach in eine Offenstellung geschwenkt wird, damit das bewegbare Dach im Aufnahmeraum abgelegt oder aus dem Aufnahmeraum herausbewegt werden kann.

In seiner Offenstellung ist das bewegbare Dach im Aufnahmeraum abgelegt, wobei die Abdeckung anschließend wieder verschlossen wird. Die Abdeckung kann mittels eines Schwenkgelenks am Fahrzeugaufbau oder an anderen Bauteilen des Fahrzeugs angebracht sein. Das Schwenken der Abdeckung erfolgt hierbei um eine Schwenkachse oder mittels eines Hebelgetriebes entlang einer im Raum angeordneten Kurvenbahn. Auch können die Schwenkbetätigung und der Antrieb sowohl am Fahrzeugaufbau wie auch an der Abdeckung angebracht sein. Eine weitere, gebräuchliche Ausführung besteht darin, dass der Antrieb der Betätigung und die Betätigung selber getrennt voneinander positioniert sein können und über Verbindungsteile miteinander gekoppelt sind.

Da sich bei geöffnetem oder geschlossenem Dach die Abdeckung jeweils in ihrer geschlossenen Endlage befindet, muss die Abdeckung durch einen geeigneten Mechanismus vor einer ungewollten Betätigung, beispielsweise durch einen starken Fahrtwind oder einen Zugriff von außen verriegelbar sein. Diese Verriegelung wirkt sowohl bei geöffnetem beziehungsweise geschlossenem Dach und kann beispielsweise am Fahrzeugaufbau oder einer Wand des das Dach aufnehmenden Aufnahmeraums angebracht sein. Weiterhin ist es bekannt, das derartige Verriegelungen mehrere Verriegelungseinheiten aufweisen können, wobei wenigstens eine der Verriegelungen zur Verriegelung der Abdeckung dient und wenigstens eine weitere Verriegelung zur Fixierung des abgelegten Dachs im Ablageraum verwendet wird. Auch ist es üblich, dass mehrere Verriegelungen gleicher Bauart zur Verriegelung der Abdeckung und des abgelegten Dachs verwendet werden. Somit kann bei vollständig abgelegtem Dach und geschlossener Abdeckung eine gleichzeitige Verriegelung des abgelegten Dachs und der Abdeckung erfolgen.

Die Abdeckung kann entlang ihres äußeren Rands eine Dichtung aufweisen, die ein Eindringen von Schmutz und/oder Wasser verhindert. Damit dies sicher gewährleistet wird, kann die Abdeckung über die Verriegelung auf die Dichtung gepresst werden. Um zusätzliche Verriegelungen und Betätigungsmechanismen einsparen zu können werden bei derartigen Verriegelungen häufig weitere Bauteile wie beispielsweise ein Spannbügel, Halterahmen oder dergleichen mit in ihrer Endlage positioniert und verriegelt.

Die DE 19912887 A 1 zeigt eine Verriegelungsvorrichtung für Fahrzeuge, insbesondere für Fahrzeuge mit einer schwenkbaren und ablegbaren Fahrzeugdachkonstruktion. Die Verriegelungsvorrichtung besteht aus einem Verriegelungselement das hakenförmig ausgebildet ist und über einen Antrieb vorzugsweise einem Hydraulikzylinder angetrieben wird. Hierbei ist das Verriegelungselement über zwei Hebel am Fahrzeugaufbau gelagert, so dass das Verriegelungselement beim Verriegelungsvorgang außer eine den Haken eingreifende Schwenkbewegung eine zusätzlich Längsbewegung ausführt, womit die zu verriegelnden Elemente in Richtung des Verriegelungselements gezogen werden. Bei den zu verriegelnden Elementen handelt es sich beispielsweise um eine bewegbare Fahrzeugdachkonstruktion und einen Verschlussdeckel der den Aufnahmeraum des abgelegten Dachs verschließt. Beide zu verriegelnden Elemente weisen Schließöffnungen auf, die über das eine Verriegelungselement in eine vorgespannte Geschlossenstellung arretiert werden können.

Aus der US 5,301,987 ist ein Cabrio-Fahrzeug bekannt, bei dem ein bewegbares Dach und ein Verdeckkastendeckel zur Abdeckung eines Aufnahmeraums für das bewegbare Dach mittels einer gemeinsamen Verriegelungseinrichtung zusammen verriegelt werden können. Bei geschlossenem Dach ragt von der Unterseite des hinteren Dachbereichs wenigstens eine Schließöse durch eine Öffnung des geschlossenen Verdeckkastendeckels in den Aufnahmeraum des Dachs hinein. Die Schließöse wird durch einen keilförmigen Verriegelungsschieber, der über Längsführungen verschiebbar an der Unterseite des Verdeckkastendeckels gelagert ist in Richtung des Verdeckkastendeckels gespannt und verriegelt. Der keilförmige Schieber ist über ein Gestänge mit einer Betätigungsvorrichtung verbunden, wobei die Betätigungsvorrichtung ebenfalls an der Unterseite des Verdeckkastendeckels angebracht ist. Die Betätigungseinrichtung setzt sich im Wesentlichen aus zwei linearen Schiebern, die als Zahnstangen ausgebildet sind, zusammen, wobei zwischen beiden linearen Schiebern ein in die Schieber eingreifendes mittiges Ritzel angeordnet ist. Über einen Antrieb des Ritzels werden die linearen Schieber mit ihren Zahnstangenverzahnungen so verschoben, dass je Fahrzeugseite ein Verriegelungsschieber geöffnet oder geschlossen werden kann. Hiermit wird das bewegbare Dach zum Verdeckkastendeckel hin positioniert und verriegelt.

In der DE 4120474 C 1 wird ein versenkbares Faltverdeck für Fahrzeuge mit einem Verdeckgestell beschrieben, das an seinem unteren Abschluss des Verdecks einen Stoffhaltebügel aufweist. An einem Verdeckkasten zur Unterbringung des gefalteten und abgelegten Verdecks ist ein schwenkbarer Verdeckkastendeckel zugeordnet, der über Verschlussmittel mit der Fahrzeugkarosserie verriegelt werden kann. Der Stoffhaltebügel kann in einer aufliegenden Stellung mit dem Verdeckkastendeckel verbunden sein, wobei die Verschlussanordnung zwischen dem Stoffhaltebügel und dem Verdeckkastendeckel durch einen einzigen Verschluss gebildet wird und dieser Verschluss als Drehfallenverschluss ausgebildet ist. Dieser Verschluss ist im Mittelbereich der Übergangszone zwischen Verdeckkastendeckel und Stoffhaltebügel angeordnet und an der Unterseite des Verdeckkastendeckels befestigt, so dass bei geschlossenem Verdeck der Stoffhaltebügel mit dem Verdeckkastendeckel verriegelt werden kann.

Die Merkmale des Oberbegriffs sind auch aus den US 5 267 769 A bekannt.

Die vorliegende Erfindung beschäftigt sich mit dem Problem, einen Verschluss für eine Abdeckung der eingangs genannten Art bzw. für ein damit ausgestattetes Fahrzeug eine verbesserte Ausführungsform anzugeben, die sich insbesondere dadurch auszeichnet, dass sie vergleichsweise mit wenigen Bauteilen eine kostengünstige, sichere und zuverlässige Verriegelung für alle mit der Verriegelung zu fixierenden gekoppelten Bauteilen schafft.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, dass eine Abdeckung durch einen Verschluss in ihrer Geschlossenstellung relativ zu wenigstens einem angrenzenden Bauteil verriegelbar ist. Die Abdeckung kann beispielsweise ein Verdeckkastendeckel von einem Aufnahmeraum für ein bewegbares Dach sein, wobei im Randbereich der Abdeckung bei geschlossenem Dach ein Spannbügel aufliegt. An der Unterseite des Spannbügels befindet sich wenigstens ein Schließbügel der durch eine Öffnung der Abdeckung in den Aufnahmeraum des bewegbaren Daches ragt. Im Bereich des Schließbügels des Spannbügels befindet sich unterhalb der Abdeckung eine Verriegelung, die sich aus einem schwenkbaren Haken, einem Verriegelungsstift und einem Hebelsystem zusammensetzt. Die gesamte Verriegelung ist beispielsweise über Halter an einer Verkleidung unterhalb der Abdeckung angebracht, so dass der gesamte Verschluss mit Hebelsystem und einem Antriebselement beim Schwenken der Abdeckung mitbewegt wird. Über das Hebelsystem kann der Verschlusshaken in den Schließbügel unterhalb des Spannbügels eingreifen, wobei die Form des Verschlusshakens während des Eingreifens in den Verschlussbügel diesen in Richtung des Aufnahmeraums ziehen kann. Zeitgleich wird über das Hebelsystem ein weiteres Verschlusssystem bestehend aus einem Verriegelungsstift und derselben Hebelmechanik des zuvor beschriebenen Verschlusshakens betätigt, wobei der Verschlussstift in eine Aufnahmebohrung eines nahe des Randbereichs der Abdeckung verlaufenden Querträgers eingreift.

Das Hebelsystem zur Betätigung des Verschlusshakens und des Verschlussstiftes ist so gestaltet, dass bei geöffnetem Verschluss Bereiche der Hebel einen inneren Anschlag bilden der sicherstellt, dass der Verschlusshaken und Verschlussstift immer in einer optimalen Offenstellung positioniert werden können. Bei geschlossenem Verschluss greifen der Verschlusshaken in den Schließbügel und der Verschlussstift in die Aufnahmebohrung des Querträgers ein, wobei in der Endposition dieser Verschlussstellung das Hebelsystem über Anlageflächen an einem weiteren Verschwenken gehindert wird. Diese Endposition bildet eine innere Verriegelung über eine sogenannte Totpunktverriegelung, so dass eine unmotivierte Verstellung des Verschlusshakens oder des Verschlussstiftes durch beispielsweise äußere einwirkende Kräfte nicht erfolgen kann. Der Verschluss weist somit in seiner Geschlossenstellung einen inneren Verriegelungsmechanismus auf.

Selbstverständlich ist es auch möglich, dass der Verschluss beispielsweise an einem karosserieseitigen Halter oder Bauteil angebracht sein kann.

Erfindungsgemäß ist die Verriegelung zwischen dem Spannbügel als Teil des bewegbaren Daches mit der Abdeckung verriegelbar, wobei das Verschlusssystem selber über den Verschlussstift mit dem Aufbau nämlich dem Querträger verriegelt werden kann. Diese Trennung ermöglicht über die Verbindung des Verschlusshakens zu Schließbügel eine kontinuierliche Vorspannung zwischen der Abdeckung und dem Spannbügel. Es kann somit sichergestellt werden, dass zwischen diesen beiden Bauteilen (Spannbügel und Abdeckung) eine umlaufende Dichtung permanent den gleichen Anpressdruck erhält und somit ein Eindringen von Wasser und Schmutz sicher verhindert wird. Das gesamte System aus Spannbügel, Abdeckung und Verschluss wird über den in den Querträger eingreifenden Verriegelungsbolzen gesichert.

Diese Ausführung ist von Vorteil, da sich mögliche Toleranzen und Vorspannungen unabhängig voneinander einstellen lassen. Somit kann die Vorspannung zur Abdichtung zwischen dem Spannbügel und der Abdeckung von der Verriegelung der Abdeckung zum Querträger unbeeinflusst bleiben, während die Verriegelung zum Querträger verändert werden kann. Ein weiterer Vorteil ist darin zu sehen, dass durch die Aufteilung der Verschlussfunktionen eine leichtere und sichere Betätigung ermöglicht wird. Auftretende Spannungen/Kräfte zwischen dem Spannbügel und der Abdeckung sowie zwischen der Abdeckung und dem Querträger werden vermieden, welche ansonsten bei der Verwendung nur eines Verschlusselements unterschiedliche Verriegelungskräfte und Anpressdrücke des Spannbügels zur Folge haben könnten. Hierbei könnte die Dichtung zwischen dem Spannbügel und der Abdeckung Schaden nehmen beziehungsweise zu unterschiedlichen Spannungen eines flexiblen Verdeckgewebes führen. Weiter werden durch diese Aufteilung der Verriegelungen Einflüsse durch Temperaturen (Schnee im Winter, starke Sonneneinstrahlung im Sommer) kompensiert. Als besonders geschickt erweist es sich, dass über das Hebelsystem beide Verschlüsse (Verschlusshaken, Verschlussstift) über nur ein Antriebselement, einem hydraulischen Zylinder, angetrieben werden können. Als weitere Antriebsmöglichkeiten stehen Elektroantriebe oder Seilzuganordnungen zur Auswahl. Die Feinabstimmung der einzelnen Verschlüsse zueinander ist von besonderer Bedeutung bei Fahrzeugen, bei denen die Abdeckung durch eine große Fläche gebildet wird und diese Fahrzeuge in einem hohen Geschwindigkeitsbereich bewegt werden können. Bei hohen Geschwindigkeiten wirkt bei großen Abdeckungen ein hoher Unterdruck, der die Abdeckung anheben kann, so dass Undichtigkeiten und erhebliche Windgeräusche zu erwarten sind. Diese Nachteile werden durch die Verwendung der beiden Verschlüsse umgangen. Desweiteren gestaltet sich die Anordnung von Verschlusshaken und Verschlussstift sowie dem Hebelsystem durch ineinandergreifende parallel angeordnete Bauteile als besonders platzsparende Konstruktion.

Es ist weiterhin denkbar, dass der Verschlusshaken in seiner Lagerung verstellbar angeordnet sein kann, so dass über den Verschlusshaken eine Feinjustierung der Verdeckstoffspannung ermöglicht wird. Die Anordnung des Verschlusses unterhalb der Abdeckung bietet eine leichte Zugänglichkeit, sowie eine einfache und leichte Einstellung der einzelnen Verschlüsse sowie der gesamten Montage des Verschlusses mit Antrieb, wobei dieser auf der Verkleidung unterhalb der Abdeckung angebracht ist.

Eine weitere vorteilhafte Variante besteht darin, dass über den Verschluss mittels einem Hebelsystem weitere Verschlusselemente angetrieben werden können, so dass eine Verriegelung des im Heckbereich abgelegten bewegbaren Dachs in seiner Ablageposition über den selben Verschluss ermöglicht werden kann. Auch ist es denkbar, dass über eine Öffnung in der Verkleidung ein Zugang als Serviceöffnung vorgesehen ist, so dass Wartungs- und Pflegearbeiten einfach durchzuführen sind. Der Verschluss kann zur einfacheren Montage als Vormontageeinheit vollständig mit allen Bauteilen auf der Verkleidung montiert und eingestellt werden, wodurch bei der Montage der Verkleidung an der Unterseite der Abdeckung eine weitere Einstellmöglichkeit gegeben ist. Vorteilhaft können an der dem Aufnahmeraum zugewandten Seite der Verkleidung Angschlagpuffer oder Abstandshalter für das abgelegte Dach angebracht sein. Auf diese Art können eigene Verschlüsse für das abgelegte Dach zur Lagefixierung entfallen. Desweiteren ist es möglich, durch die Verwendung nur eines einzigen Sensors eine Überwachung beider Verschlüsse durchzuführen. Der zeitgleiche Ablauf beim Verschließen oder Öffnen des Verschlusses erlaubt sehr schnelle Betätigungszeiten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Schrägansicht auf den Verschluss mit Längsschnitt durch die Abdeckung und deren umgebenden Bauteile,
- Fig. 2: eine Seitenansicht auf den Verschluss mit Hebelsystem in geöffneter Stellung,
- Fig. 3: eine Seitenansicht auf den Verschluss mit Hebelsystem in geschlossener Stellung,
- Fig. 4: eine schräge Ansicht auf den geschlossenen Verschluss aus einer vorderen Position,
- Fig. 5: eine perspektivische Seitenansicht auf den geöffneten Verschluss mit Koppellenkern zur Betätigung der Verschlusselemente,
- Fig. 6: eine perspektivische Seitenansicht auf den geschlossenen Verschluss mit Koppellenkern zur Betätigung der Verschlusselemente,

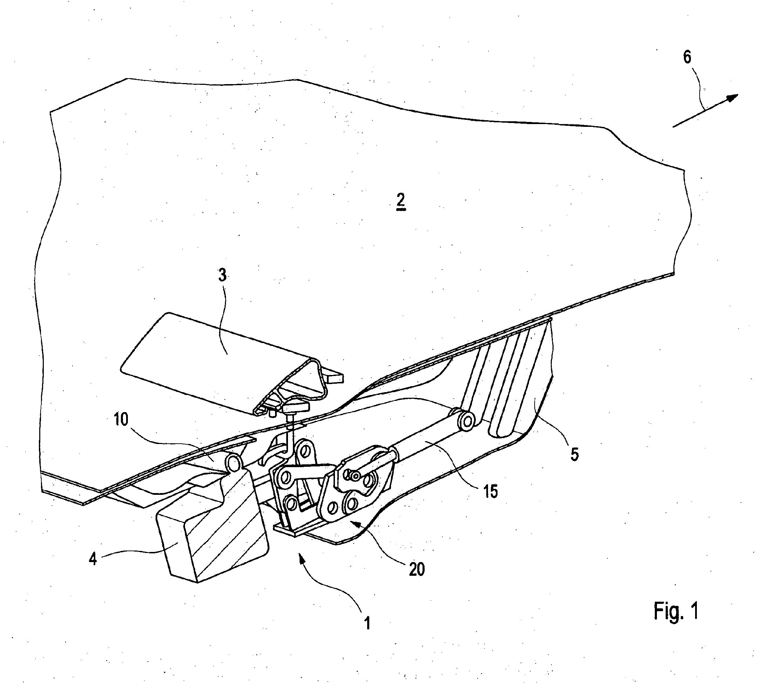

In Figur 1 ist eine Schrägansicht auf den Verschluss 1 mit Längsschnitt durch die Abdeckung 2 und deren umgebende Bauteile dargestellt. Die Abdeckung 2 befindet sich in geschlossener Stellung, so dass der Aufnahmeraum für das bewegbare Dach durch die Abdeckung 2 verschlossen ist. Entgegen der Fahrtrichtung 6 ist im hinteren Bereich der Abdeckung 2 ein Spannbügel 3 etwa im Bereich der hinteren Kante der Abdeckung 2 auf dieser aufliegend. Der Spannbügel 3 ist ein im Wesentlichen dreieckiges Hohlprofil, vorzugsweise aus einem Leichtmetall hergestellt und weist in seinem entgegen der Fahrtrichtung 6 weisenden Ende eine Aufnahme 11 für eine Dichtung auf. Weiter ist an der Unterseite des Spannbügels 3 wenigstens ein U-förmiger Schließbügel 30 angebracht, der bei geschlossener Abdeckung 2 durch eine Öffnung in der Abdeckung 2 oder in der Trennung zwischen der Abdeckung 2 und der Karosserie in den Aufnahmeraum des bewegbaren Dachs ragt. Eine in die Aufnahme 11 in den Spannbügel 3 eingebrachte Dichtung verhindert bei geschlossenem Spannbügel 3, dass Schmutz oder Wasser in die Trennung zwischen Karosserie und Abdeckung 2 gelangen kann. Diese Dichtung ist vorteilhaft als Profildichtung ausgebildet, welche in Geschlossenstellung des Spannbügels 3 eine Verformung erfährt und somit eine permanente Vorspannung zwischen dem Spannbügel 3, der Karosserie und/oder der Abdeckung 2 erzeugt. Weiter wird durch diese Dichtungsanordnung im Spannbügel 3 ein Kontakt zwischen dem Spannbügel 3 und der Abdeckung 2 beziehungsweise der Karosserie verhindert, so dass Klappergeräusche zwischen dem Spannbügel 3, der Abdeckung 2 und/oder der Karosserie verhindert werden.

Der durch die Öffnung der Abdeckung 2 ragende Schließbügel 30 wird unterhalb der Abdeckung 2 durch einen Verschlusshaken 27 in geschlossener Position gehalten. Hierbei wird über den Verschlusshaken 27 der U-förmige Schließbügel 30 in Richtung des Aufnahmeraums gezogen, wobei außer der Vorspannung der Dichtung des Spannbügels 3 auch die Abdeckung 2 in Richtung des Aufnahmeraums gezogen wird. Hierbei trifft die Abdeckung 2 in ihrem hinteren Bereich auf eine Dichtung 10 eines Querträgers 4 der mit dem Fahrzeugaufbau verbunden ist. Auch hier ist es Aufgabe der Dichtung das Eindringen von Schmutz und Wasser zu verhindern. Die Dichtung 10 ist als hohle Profildichtung 10 ausgebildet und wird beim Kontakt mit der Unterseite der Abdeckung 2 leicht zusammengedrückt. Auch hier entsteht eine für die Dichtung 10 notwendige Vorspannung die mögliche Klappergeräusche der Abdeckung 2 zur Karosserie und umgehenden Bauteilen verhindern soll. Entgegen die Fahrtrichtung 6 weisend befindet sich im hinteren Bereich der Abdeckung 2 eine von deren Unterseite in Richtung des Aufnahmeraums weisende Verkleidung 5, die vorzugsweise aus einem umgeformten Blech gefertigt ist. Der zwischen der Verkleidung 5 und der Abdeckung 2 gebildete Raum dient zur Aufnahme des Verschlusses 1 und seinem Antrieb, der in dieser Ausführung als hydraulischer Zylinder 15 ausgebildet ist. Selbstverständlich ist es möglich, dass der hydraulische Zylinder 15 durch vergleichbare Linearantriebe ersetzt werden kann. Auch sind als Antrieb Elektromotoren mit einem zwischengeschalteten Getriebe denkbar.

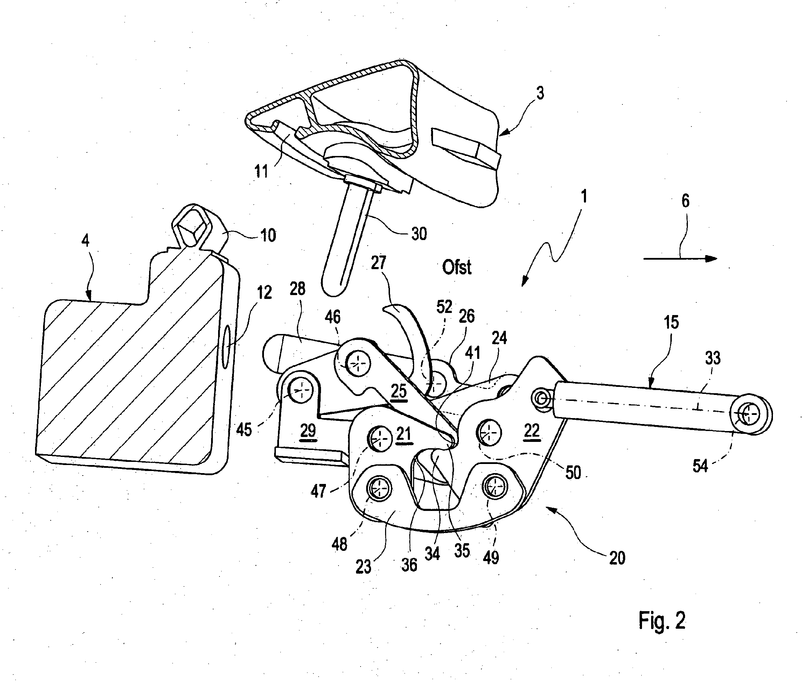

In der Figur 2 sind in Seitenansicht der Verschluss 1 mit einem den Verschluss 1 betätigenden Hebelsystem 20 in geöffneter Stellung abgebildet. Der Verschluss 1 besteht im Wesentlichen aus zwei Verriegelungselementen, einem schwenkbaren Verschlusshaken 27 und einem linear verschiebbaren Verschlussstift 28. Wie in Figur 1 bereits beschrieben, dringt bei geschlossener Abdeckung 2 ein U-förmiger Schließbügel 30, der an der Unterseite des Spannbügels 3 befestigt ist, durch eine Öffnung der Abdeckung 2 in den Aufnahmeraum des bewegbaren Dachs. In dieser Endlage ragt der Schließbügel 30 in den Fangbereich des Verschlusshakens 27 und wird bei sich schließendem Verschluss 1 durch den Verschlusshaken 27 gegriffen, wobei die Hakenform des Verschlusshakens 27 so gestaltet ist, dass sich bei weiter schließendem Verschlusshaken 27 der Schließbügel 30 weiter in Richtung des Aufnahmeraums des bewegbaren Daches gezogen wird. Auf diese Weise wird der Spannbügel 3 mit seinem U-förmigen Schließbügel 30 zueinander in ihrer Lage fixiert und verriegelt. Damit der zu Abdeckung 2 verriegelte Spannbügel 3 in Geschlossenstellung der Abdeckung zum Fahrzeugaufbau fixiert werden kann, ist im Verschluss 1 ein linear verschiebbarer Verschlussstift 28 vorgesehen. Dieser Verschlussstift 28 greift beim Verschließen in eine Aufnahmebohrung 12 eines im Heckbereich des Fahrzeugs verlaufenden Querträgers 4 ein und bildet somit eine Verriegelung des über den Verschlusshaken 27 mit der Abdeckung 2 verriegelten Spannbügels 3 zum Fahrzeugaufbau.

Bei der in Figur 2 gezeigten Offenstellung OFST ist der Verschlusshaken 27 in Fahrtrichtung 6 um die Schwenkachse 45 geschwenkt. Die Schwenkachse 45 stellt die Lagerung des Verschlusshakens 27 zur Verkleidung 5 dar, wobei die Schwenkachse 45 durch ein Lagerauge des Halters 29 gebildet wird. Der Halter 29 ist mit seiner unteren Seite an der Verkleidung 5 durch geeignete Befestigungsmittel angebracht.

Synchron zur Schwenkbewegung des Verschlusshakens 27 wird der linear verschiebbare Verschlussstift 28 in die korrespondierende Aufnahmebohrung 12 verschoben. Hierbei wird der Verschlussstift 28 in einer in den Figuren nicht dargestellten Führung linear verschiebbar geführt. Beide Verschlusselemente, Verschlusshaken 27 und Verschlussstift 28 sind über Koppellenker 25, 26 mit einem Hebelsystem 20 verbunden. Das Hebelsystem 20 ist so gestaltet, dass durch die Wahl der Hebel 21, 22, 23, eine entsprechende Antriebsübersetzung für den Verschlusshaken 27 und Verschlussstift 28 gebildet wird. Angetrieben wird das Hebelsystem 20 über einen hydraulischen Zylinder 15, der schwenkbeweglich mit der Schwenkachse 54 an der Verkleidung 5 gelagert ist.

Im Hebelsystem 20 ist ein hinterer Hebel 22 um eine Schwenkachse 50 schwenkbar gelagert, wobei der hintere Hebel 22 über wenigstens einen Verbindungslenker 23 mit einem vorderen Hebel 21 in Wirkverbindung steht. Der Verbindungslenker 23 ist über die Schwenkachse 49 mit dem hinteren Hebel 22 bewegbar gelagert und über die Schwenkachse 48 bewegbar mit dem vorderen Hebel 21 verbunden. Der vordere Hebel 21 wird um die Schwenkachse 47 bewegt, wobei die Schwenkachse 47 durch den Halter 29 gebildet wird. Der vordere Hebel 21 weist in Richtung des hinteren Hebels 22 weisend einen vorderen Nocken 35 auf, der mit einer vorderen Nockenbahn 36 auf der hinteren Nockenbahn 41 eines hinteren Nockens 34 des hinteren Hebels 22 in Kontakt steht. Beide Nocken 34, 35 bilden bei Offenstellung des Verschlusses einen inneren Anschlag des Hebelsystems 20, womit ein weiteres Öffnen des Verschlusshakens 27 und des Verschlussstiftes 28 begrenzt werden. Der vordere Hebel 21 und der hintere Hebel 22 sind in einer Ebene angeordnet und werden über die flächig parallel angeordneten Verbindungslenker 23 zu beiden Seiten der Hebel 21, 22 verbunden. Auf der Schwenkachse 47 des vorderen Hebels 21 ist weiter ein Steuerhebel 24 positioniert. Dieser Steuerhebel 24 weist zwei weitere voneinander beabstandete und versetzte Schwenkachsen 51 und 53 auf. In der Schwenkachse 53 ist ein Koppellenker 25 schwenkbar gelagert, der zur Übertragung der Schließ- und Öffnungsbewegung des Hebelsystems auf den Verschlusshaken 27 dient. Der Koppellenker 25 ist unterhalb der Hakenöffnung des Verschlusshakens 27 mit der Schwenkachse 46 mit dem Verschlusshaken 27 verbunden. Über die Schwenkachse 51 des Steuerhebels 24 wird der Koppellenker 26 angetrieben, der die Schließbewegung auf den Verschlussstift 28 überträgt. Der hintere Hebel 22 ist mit der Schwenkachse 50 schwenkbar an einem nicht dargestellten Halter beweglich gelagert. An seinem dem hinteren Nocken 34 entgegengesetzten Ende des hinteren Hebels 22 ist die Kolbenstange 60 des hydraulischen Zylinders 15 gelenkig angebracht.

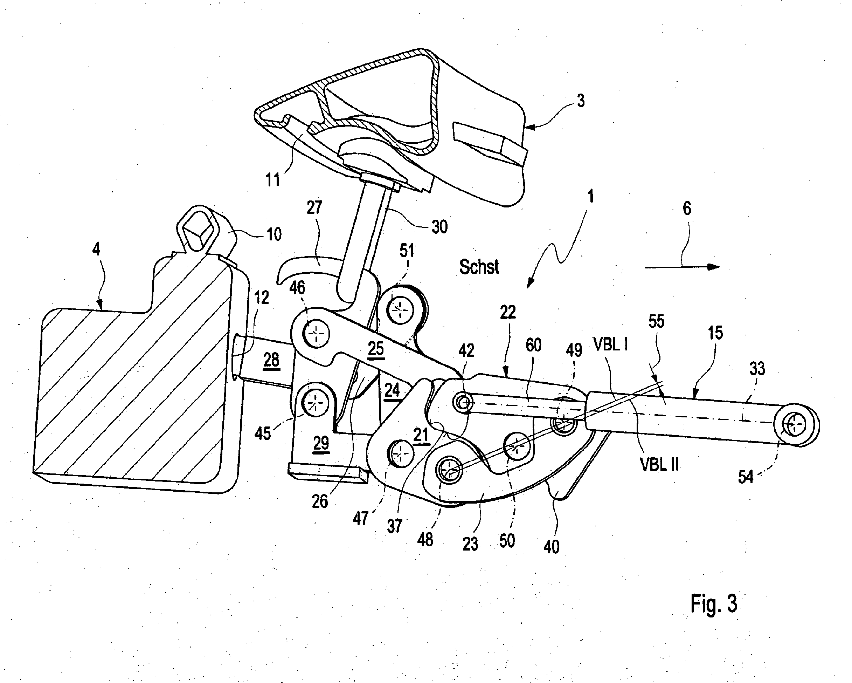

Eine Seitenansicht auf den Verschluss 1 mit Hebelsystem 20 in geschlossener Stellung ist in Figur 3 abgebildet. Hierbei befinden sich die Verschlusselemente 27, 28 in Schließstellung Schst, wobei der Verschlusshaken 27 in den U-förmigen Schließbügel 30 eingreift und der Verschlussstift 28 in die Aufnahmebohrung 12 hineingeschoben ist. Die Schließbewegungen des Verschlusshakens 27 und des Verschlussstiftes 28 werden durch die Kinematik des Hebelsystems 20 erzeugt. Hierbei wird die Kolbenstange 60 aus dem hydraulischen Zylinder 15 ausgefahren, wobei der hintere Hebel 22 eine Schwenkbewegung entgegen des Uhrzeigersinns durchführt. Über die Verbindungslenker 23 wird die Schwenkbewegung des hinteren Hebels 22 auf den vorderen Hebel 21 übertragen, der um die Schwenkachse 47 ebenfalls eine Schwenkbewegung entgegen des Uhrzeigersinns durchführt. Die in Offenstellung Ofst aufeinander liegenden Nocken 34, 35 werden voneinander so wegbewegt, dass eine hintere Anlagefläche 42 des hinteren Hebels 22 mit einer vorderen Anlagefläche 37 des vorderen Hebels 21 in Kontakt gerät und somit eine Blockbildung beider Hebel 21, 22 entsteht. Auf diese Weise wird ein weiteres Verschwenken des Verschlusshakens 27 sowie ein weiteres Verschieben des Verschlussstiftes 28 verhindert. Bei diesem Bewegungsablauf des Hebelsystems 20 wandert die Verbindungslinie VBL I über die Schwenkachse 50 des hinteren Hebels 22 mit dem Abstand 55 hinweg. Der Abstand 55 wird durch die parallele Gerade VBL II, die durch die Schwenkachse 50 verläuft gebildet. Durch das Überqueren der Schwenkachse 50 durch die Verbindungslinie VBL I wird eine Verriegelung des Hebelsystems 20 erzeugt. Diese Verriegelung ist mit dem Abstand 55 der beiden Verbindungslinien VBL 1, VBL II das Maß, mit der die Verbindungslinie VBL I über die Schwenkachse 50 überdrückt wird. Ein einwandfreies Verschwenken der Hebel 21, 22, 23 des Hebelsystems 20 ist so lange gewährleistet, bis die Verbindungslinie VBL II während des Schließvorgangs die Schwenkachse 50 nicht überquert. Für das Überqueren der Schwenkachse 50 wird das Hebelsystem 20 überdrückt (überschnappt). Diese Verriegelung stellt eine sogenannte Übertotpunktverriegelung dar. Hierbei ist es nicht möglich, dass durch Einwirkungen von außen beispielsweise über den Verschlusshaken 27 oder den Verriegelungsstift 28 eine Schwenkbewegung im Hebelsystem erzeugt wird.

Damit das Hebelsystem 20 wieder geöffnet werden kann, muss die Verbindungslinie VBL 1 wieder über die Schwenkachse 50 zurückbewegt werden. Ab Überqueren dieser Schwenkachse 50 kann das Hebelsystem 20 wieder leicht bewegt werden. In der Position der Totpunktverriegelung des Hebelsystems 20 kann eine Bewegung des Hebelsystems 20 nur über den hydraulischen Zylinder 15 mit seiner Kolbenstange 60 erfolgen. Dies ist auch nur dadurch möglich, da die Mittellinie des hydraulischen Zylinders 15 und der Kolbenstange 60 oberhalb der Schwenkachse 49 verläuft und somit der kurze Hebelarm zwischen der Mittellinie 33 und der Schwenkachse 49 für eine Schwenkbewegung des hinteren Hebels 22 wirken kann.

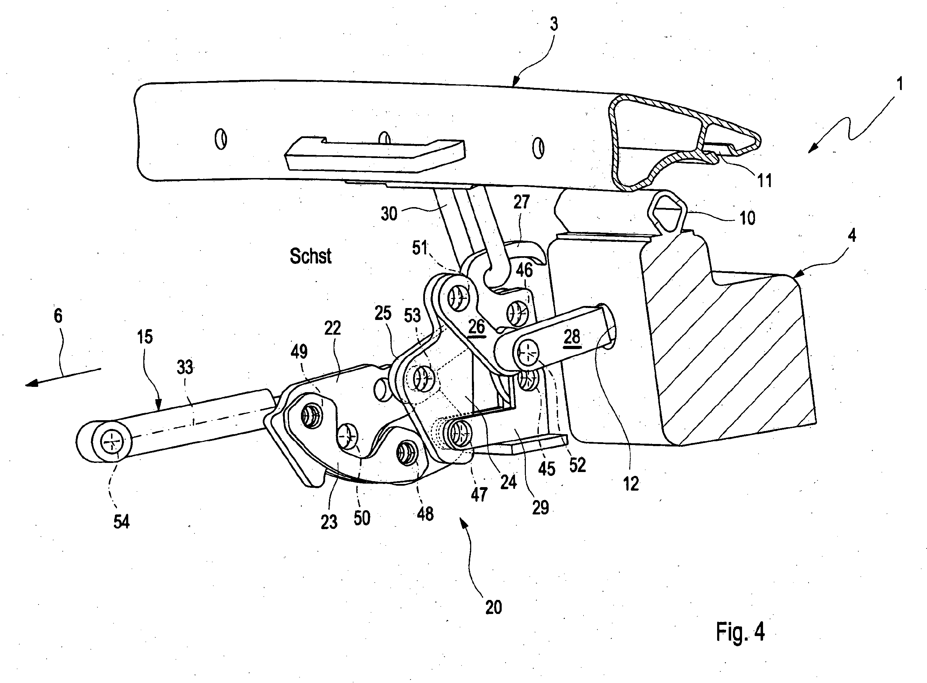

In Figur 4 ist eine schräge Ansicht auf den geschlossenen Verschluss 1 aus einer in Fahrtrichtung 6 vor dem Verschluss 1 liegenden Position dargestellt. In dieser Ansicht ist der Steuerhebel 24 in eine nahezu vertikale Position geschwenkt, wobei der Koppellenker 26 den Verschlussstift 28 in dessen Arretierungsstellung verschoben hat. Das gesamte Hebelsystem 20 ist aus flächigen Bauteilen aufgebaut und über Schwenkachsen 46, 47, 48, 49, 50, 51, 52, 53, miteinander verbunden. Diese Bauweise ermöglicht eine besonders raumsparende Anordnung des Hebelsystems 20 mit den Verschlusselementen 27, 28, so dass im Aufnahmeraum beziehungsweise unterhalb der Abdeckung 2 nur ein geringer Bauraum zur Aufnahme des Verschlusses 1 benötigt wird.

Weiter sind diese flächigen Bauteile (Hebel/Lenker 21, 22, 23, 24, 25, 26, 65) einfach und kostengünstig aus einem Blech auszuschneiden beziehungsweise auszustanzen. Damit die im Hebelsystem 20 beziehungsweise bei den Verschlusselementen 27, 28 auftretenden Kräfte möglichst symmetrisch in das Hebelsystem 20 eingeleitet werden, ist der Koppellenker 25 und der Koppellenker 26 je auf einer Seite des Steuerlenkers 24 angebracht. Der Steuerlenker 24 ist mit dem vorderen Hebel 21 drehfest auf der Schwenkachse 47 gelagert. Auch hier ist zur symmetrischen Kraftanleitung der Steuerlenker 24 auf der einen Seite des Hebelsystems 20 positioniert, während die Antriebseinheit des hydraulischen Zylinders 15 mit der Kolbenstange 60 auf der gegenüber liegenden Seite des Hebelsystems 20 angebracht sind.

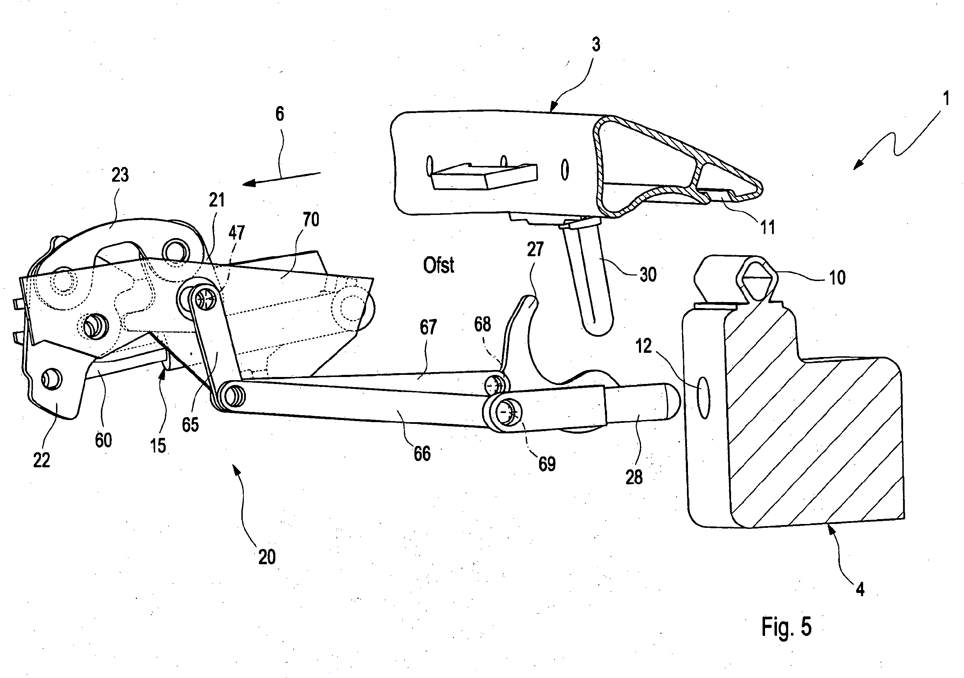

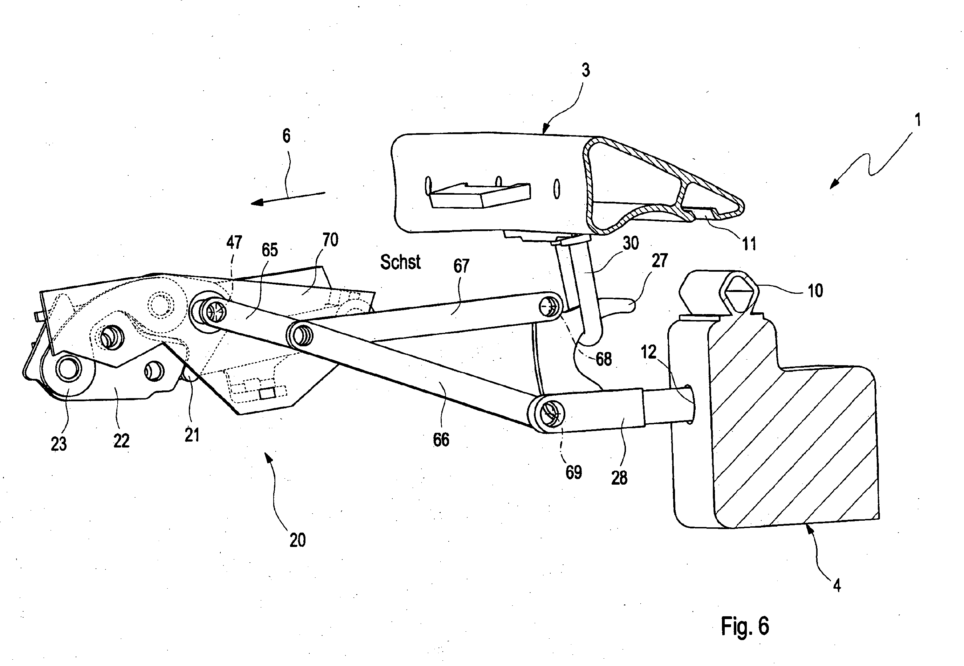

Eine weitere Ausgestaltung des Verschlusses 1 ist als perspektivische Seitenansicht auf den geöffneten Verschluss 1 mit Koppellenkern 66, 67 zur Betätigung der Verschlusselemente 27, 28 in Figur 5 dargestellt. Hierbei wird wie in den zuvor beschriebenen Figuren 1 - 4 das gleiche Hebelsystem 20 verwendet, wobei der hydraulische Zylinder 15 mit seiner Kolbenstange 60 entgegen der Fahrtrichtung 6 von hinten auf den hinteren Lenker 22 wirkend angeordnet ist. Zur Lagerung des hydraulischen Zylinders 15 dient ein Halter 70 der zugleich auch als Halter 70 für den hinteren Hebel 22 und den vorderen Hebel 21 dient. Der Halter 70 kann beispielsweise an der Verkleidung 5 oder an einem Karosserieteil angebracht sein. Diese Anordnung ist dann von Vorteil, wenn das Hebelsystem 20 durch Beschränkungen des Bauraums relativ weit von den Verriegelungselementen 27, 28 entfernt angeordnet sind. Anstelle des Steuerhebels 24 ist bei dieser Ausführung entsprechend Figur 5 und 6 ein Steuerhebel 65 drehfest mit dem vorderen Hebel 21 auf der Schwenkachse 47 gelagert. In Offenstellung Ofst des Verschlusses 1 sind der Verschlusshaken 27 und der Verschlussstift 28 aus ihrer Eingriffsposition herausbewegt, wobei der Steuerhebel 65 in Richtung des Aufnahmeraums des beweglichen Dachs zeigt. Am freien Ende des Steuerhebels 65, der ebenfalls als flaches Bauteil aus einem Blech hergestellt ist, befinden sich auf seiner zum Halter 70 gewandten Seite der Koppellenker II 67 der als Übertragungsglied zwischen dem Steuerhebel 65 und dem Verschlusshaken 27 dient. Auf der gegenüberliegenden Seite des Steuerhebels 65 ist ein Koppellenker I 66 zur Betätigung des Verschlussstiftes 28 angeordnet. Beide Koppellenker I, II 66, 67 sind in der Offenstellung Ofst des Verschlusses 1 nahe zueinander positioniert. Auch ist es möglich, dass beide Koppellenker I, II 66, 67 parallel zu einander angeordnet sein können.

In der Figur 6 ist die perspektivische Seitenansicht auf den geschlossenen Verschluss 1 mit Koppellenkern I, II 66, 67 zur Betätigung der Verschlusselemente 27 und 28 dargestellt. Hierbei ist das Hebelsystem 20 wie in Figur 3 beschrieben auf Block in die Totpunktverriegelung bewegt. Der vordere Hebel 21 ist entgegen des Uhrzeigersinnes geschwenkt, wobei der Steuerhebel 65 in demselben Schwenkwinkel wie der vordere Hebel 21 bewegt wird. In dieser Stellung ist der Steuerhebel 65 in Richtung der Verschlusselemente 27 und 28 zeigend verschwenkt, wobei der Steuerhebel 65 und die Koppelstange I 66 sich nahezu in Strecklage zueinander befinden. Durch Verschwenken des Verschlusshakens 27 wird der Koppellenker II 67 in eine leicht nach oben gerichtete Position bewegt, wobei sein dem Steuerhebel 65 entgegen gesetztes Ende schwenkbar um die Schwenkachse 68 angebracht ist. Entsprechend der gewünschten Schließbewegung des Verschlusshakens 27 kann die Schwenkachse 68 an unterschiedlichen Stellen des Verschlusshakens 27 positioniert sein. In Offenstellung Ofst des Verschlusses 1 sind die Schwenkachsen 68 (Koppellenker II 67 zu Verschlusshaken 27) und die Schwenkachse 69 (Koppellenker I 66 zu Verschlussstift 28) nahezu auf einer vertikalen Achse übereinanderliegend angeordnet. Durch die Übersetzung des Steuerhebels 65, der Längenabmessungen der Koppellenker I, II 66, 67 und der Anbindung des Koppellenkers II 67 am Verschlusshaken 27 sind auch in der Schließstellung Schst die Schwenkachsen 68 und 69 nahezu parallel übereinander positioniert.

Bei sehr engen Raumverhältnissen kann das Hebelsystem 20 mit dem hydraulischen Zylinder 15 weit entfernt an den Verschlusselementen 27 und 28 positioniert sein. Zur Übertragung zwischen dem Hebelsystem 20 und den Verschlusselementen 27, 28 ist es denkbar, dass mehrere Koppellenker als weiteres Hebelgetriebe hintereinander angeordnet sein können. Auch ist es möglich, dass zur Übertragung der Verschluss- beziehungsweise Öffnungsbewegung anstelle der Koppelstangen I, II 66, 67 Bowdenzüge verwendet werden können.

## Patentansprüche

1. Verschluss (1) für eine Abdeckung (2) eines Fahrzeugs, insbesondere eines Cabriolet-Fahrzeugs mit einem bewegbaren Dach,
- wobei die Abdeckung (2) zwischen einer Offenstellung und einer Geschlossenstellung bewegbar ist und die Abdeckung (2) einen Aufnahmeraum für das bewegbare Dach verschließt und bei Geschlossenstellung auf der Abdeckung (2) ein Spannbügel (3) positioniert ist,
- wobei der Spannbügel (3) und die Abdeckung (2) über den Verschluss (1) in der Geschlossenstellung zum Fahrzeugaufbau fixiert und verriegelt sind und dabei der Spannbügel (3) mit einem Schließbügel (30) in den Aufnahmeraum ragt und von dem Verschluss (1) gehalten wird,
- wobei der Verschluss (1) unterhalb der Abdeckung (2) angeordnet ist und beim Schwenken der Abdeckung (2) mitbewegt wird,
- wobei der Verschluss (1) ein Hebelsystem (20) und einen hydraulischen Zylinder (15) zur Betätigung des Verschlusses (1) aufweist,
**dadurch gekennzeichnet,**
**dass** der Verschluss (1) zwei Verriegelungselemente, einen Verschlusshaken (27) und einen Verschlussstift (28) aufweist und die Verriegelungselemente unterschiedliche Verschlussfunktionen aufweisen.

2. Verschluss (1) für eine Abdeckung (2) nach Anspruch 1,
**dadurch gekennzeichnet,**
**dass** bei den unterschiedlichen Verschlussfunktionen ein Verschlusshaken (27) den Spannbügel (3) zur Abdeckung (2) verriegelt und der Verschlussstift (28) den Verschluss (1), den Spannbügel (3) und die Abdeckung (2) zu einem fahrzeugfesten Querträger (4) verriegelt.

3. Verschluss (1) für eine Abdeckung (2) nach Anspruch 1 und 2,
**dadurch gekennzeichnet,**
**dass** der Verschlusshaken (27) und der Verschlussstift (28) mittels Koppellenker (25, 26 66, 67) über einen mit dem Hebelsystem (20) drehfest verbundnen Steuerlenker (24, 65) zwischen einer Offenstellung (Ofst) und einer Schließstellung (Schst) bewegt werden können.

4. Verschluss (1) für eine Abdeckung (2) nach Anspruch 1 bis 3,
**dadurch gekennzeichnet,**
**dass** das Hebelsystem (20) jeweils in der Offenstellung (Ofst) und in der Schließstellung (Schst) über Anschläge zweier Hebel (21, 22) zueinander verfügt und somit die Endpositionen des Verschlusshakens (27) und des Verschlussstiftes (28) begrenzt.

5. Verschluss (1) für eine Abdeckung (2) nach Anspruch 4,
**dadurch gekennzeichnet,**
**dass** die Hebel (21, 22, 23, 24, 65) und Koppellenker (25, 26, 66, 67) des Hebelsystems (20) aus Blech ausgeschnitten sind und die Hebel (21, 22, 23, 24, 65) und die Koppellenker (25, 26; 66, 67) als Hebelsystem (20) nebeneinander geschichtet angeordnet sind.

6. Verschluss (1) für eine Abdeckung (2) nach einem der Ansprüche 4 und 5,
**dadurch gekennzeichnet,**
**dass** die Koppellenker (66, 67) als lange Übertragungslenker ausgebildet sind.

7. Verschluss (1) für eine Abdeckung (2) nach den Ansprüchen 4 bis 6,
**dadurch gekennzeichnet,**
**dass** anstelle der Koppellenker (25, 26, 66, 67) Bowdenzüge verwendet werden.

8. Verschluss (1) für eine Abdeckung (2) nach einem oder mehreren der vorangehenden Ansprüche,
**dadurch gekennzeichnet,**
**dass** in Schließstellung (Schst) des Hebelsystems (20) die Verbindungslinie VBL I der Schwenkachsen (48, 49) eines vorderen Hebels (21) und eines hinteren Hebels (22) über eine Schwenkachse (50) in eine Totpunktstellung zur Verriegelung des Hebelsystems (20) bewegt wird.

9. Verschluss (1) für eine Abdeckung (2) nach einem oder mehreren der vorangehenden Ansprüche,
**dadurch gekennzeichnet,**
**dass** der Verschluss (1) und das Hebelsystem (20) mit dem hydraulischen Zylinder (15) an der Innenseite einer Verkleidung (5) montiert sind und die Verkleidung (5) an der Unterseite der Abdeckung (2) befestigt ist.

10. Fahrzeug, insbesondere Cabriolet-Fahrzeug mit einem bewegbaren Dach, mit einem Verschluss (1) für eine Abdeckung (2) nach einem der Ansprüche 1 bis 9.

## Claims

1. Locking (1) for a covering (2) of a vehicle, in particular of a convertible vehicle with a movable roof,
- wherein the covering (2) is movable between an open position and a closed position, and the covering (2) closes a receiving space for the movable roof and, in the closed position, a tensioning bow (3) is positioned on the covering (2),
- wherein the tensioning bow (3) and the covering (2) are secured and locked with respect to the vehicle body in the closed position via the locking (1) and the tensioning bow (3) projects here with a closing bow (30) into the receiving space and is held by the locking (1),
- wherein the locking (1) is arranged below the covering (2) and is moved together with the pivoting of the covering (2),
- wherein the locking (1) has a lever system (20) and a hydraulic cylinder (15) for actuating the locking (1),
**characterized in that** the locking (1) has two lock elements, a locking hook (27) and a locking pin (28), and the lock elements have various locking functions.

2. Locking (1) for a covering (2) according to Claim 1,
**characterized in that**
in the various locking functions, a locking hook (27) locks the tensioning bow (3) with respect to the covering (2), and the locking pin (28) locks the locking (1), the tensioning bow (3) and the covering (2) to a vehicle-mounted cross member (4).

3. Locking (1) for a covering (2) according to Claims 1 and 2,
**characterized in that**
the locking hook (27) and the locking pin (28) can be moved between an open position (Ofst) and a closed position (Schst) by means of coupling links (25, 26, 66, 67) via a control link (24, 65) which is connected to the lever system (20) for rotation therewith.

4. Locking (1) for a covering (2) according to Claims 1 to 3,
**characterized in that**
both in the open position (Ofst) and in the closed position (Schst), the lever system (20) has available stops of two levers (21, 22) with respect to each other and therefore limits the end positions of the locking hook (27) and of the locking pin (28).

5. Locking (1) for a covering (2) according to Claim 4,
**characterized in that**
the levers (21, 22, 23, 24, 65) and coupling links (25, 26, 66, 67) of the lever system (20) are cut out of sheet metal, and the levers (21, 22, 23, 24, 65) and the coupling links (25, 26, 66, 67) are arranged in a layered manner next to one another as the lever system (20).

6. Locking (1) for a covering (2) according to either of Claims 4 and 5,
**characterized in that**
the coupling links (66, 67) are designed as long transmission links.

7. Locking (1) for a covering (2) according to Claims 4 to 6,
**characterized in that**
Bowden cables are used instead of the coupling links (25, 26, 66, 67).

8. Locking (1) for a covering (2) according to one or more of the preceding claims,
**characterized in that**
in the closed position (Schst) of the lever system (20), the connecting line VBLI of the pivot axes (48, 49) of a front lever (21) and of a rear lever (22) is moved over a pivot axis (50) into a dead centre position in order to lock the lever system (20).

9. Locking (1) for a covering (2) according to one or more of the preceding claims,
**characterized in that**
the locking (1) and the lever system (20) are mounted by the hydraulic cylinder (15) on the inside of a lining (5) and the lining (5) is fastened to the lower side of the covering (2).

10. Vehicle, in particular convertible vehicle with a movable roof, with a locking (1) for a covering (2) according to one of Claims 1 to 9.

## Revendications

1. Verrouillage (1) pour un recouvrement (2) d'un véhicule, en particulier d'un véhicule de type cabriolet comprenant un toit mobile,
- le recouvrement (2) étant mobile entre une position ouverte et une position fermée et le recouvrement (2) fermant un espace de réception pour le toit mobile et un étrier de tension (3) étant positionné sur le recouvrement (2) en cas de position fermée,
- l'étrier de tension (3) et le recouvrement (2) étant fixés et bloqués par rapport à la carrosserie de véhicule dans la position fermée par le biais du verrouillage (1) et l'étrier de tension (3) faisant en l'occurrence saillie dans l'espace de réception par un étrier de fermeture (30) et étant retenu par le verrouillage (1),
- le verrouillage (1) étant disposé en dessous du recouvrement (2) et étant déplacé conjointement lors du pivotement du recouvrement (2),
- le verrouillage (1) comprenant un système à leviers (20) et un cylindre hydraulique (15) pour l'actionnement du verrouillage (1), **caractérisé en ce que**
le verrouillage (1) comprend deux éléments de blocage, un crochet de verrouillage (27) et une goupille de verrouillage (28) et les éléments de blocage présentent différentes fonctions de verrouillage.

2. Verrouillage (1) pour un recouvrement (2) selon la revendication 1, **caractérisé en ce**
**qu'**en cas de fonctions de verrouillage différentes, un crochet de verrouillage (27) bloque l'étrier de tension (3) par rapport au recouvrement (2) et la goupille de verrouillage (28) bloque le verrouillage (1), l'étrier de tension (3) et le recouvrement (2) par rapport à une traverse (4) solidaire du véhicule.

3. Verrouillage (1) pour un recouvrement (2) selon les revendications 1 et 2,
**caractérisé en ce que**
le crochet de verrouillage (27) et la goupille de verrouillage (28) peuvent être déplacés entre une position ouverte (Ofst) et une position de fermeture (Schst) au moyen de bras d'accouplement (25, 26, 66, 67) par le biais d'un bras de commande (24, 65) relié de manière solidaire en rotation au système à leviers (20).

4. Verrouillage (1) pour un recouvrement (2) selon les revendications 1 à 3,
**caractérisé en ce que**
le système à leviers (20) dispose respectivement dans la position ouverte (Ofst) et dans la position de fermeture (Schst) de butées de deux leviers (21, 22) l'un par rapport à l'autre et limite par conséquent les positions finales du crochet de verrouillage (27) et de la goupille de verrouillage (28).

5. Verrouillage (1) pour un recouvrement (2) selon la revendication 4,
**caractérisé en ce que**
les leviers (21, 22, 23, 24, 65) et les bras d'accouplement (25, 26, 66, 67) du système à leviers (20) sont découpés dans de la tôle et les leviers (21, 22, 23, 24, 65) et les bras d'accouplement (25, 26, 66, 67) sont disposés de manière stratifiée les uns à côté des autres en tant que système à leviers (20).

6. Verrouillage (1) pour un recouvrement (2) selon l'une quelconque des revendications 4 et 5,
**caractérisé en ce que**
les bras d'accouplement (66, 67) sont réalisés sous forme de bras de transmission longs.

7. Verrouillage (1) pour un recouvrement (2) selon les revendications 4 à 6,
**caractérisé en ce que**
des câbles Bowden sont utilisés au lieu des bras d'accouplement (25, 26, 66, 67).

8. Verrouillage (1) pour un recouvrement (2) selon l'une quelconque ou plusieurs des revendications précédentes,
**caractérisé en ce que**,
dans la position de fermeture (Schst) du système à leviers (20), la ligne de liaison VBL I des axes de pivotement (48, 49) d'un levier avant (21) et d'un levier arrière (22) est déplacée au-delà d'un axe de pivotement (50) jusqu'à une position de point mort pour le blocage du système à leviers (20).

9. Verrouillage (1) pour un recouvrement (2) selon l'une quelconque ou plusieurs des revendications précédentes,
**caractérisé en ce que**
le verrouillage (1) et le système à leviers (20) sont montés avec le cylindre hydraulique (15) sur le côté intérieur d'un habillage (5) et l'habillage (5) est fixé au côté inférieur du recouvrement (2).

10. Véhicule, en particulier véhicule de type cabriolet comprenant un toit mobile, comprenant un verrouillage (1) pour un recouvrement (2) selon l'une quelconque des revendications 1 à 9.
